(19) Europäisches Patentamt
European Patent Office
Office européen des brevets

(11) **EP 3 038 056 A1**

(12) **EUROPEAN PATENT APPLICATION**

(43) Date of publication:
**29.06.2016 Bulletin 2016/26**

(51) Int Cl.:
**G06T 7/20** (2006.01)

(21) Application number: **15198512.4**

(22) Date of filing: **08.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.12.2014 US 201414582446**

(71) Applicant: **Sony Corporation
Tokyo 108-0075 (JP)**

(72) Inventor: **Gurbuz, Sabri
Campbell, CA 95008 (US)**

(74) Representative: **D Young & Co LLP
120 Holborn
London EC1N 2DY (GB)**

(54) **METHOD AND SYSTEM FOR PROCESSING VIDEO CONTENT**

(57) Various aspects of a method and system to process video content are disclosed herein. In accordance with an embodiment, the method includes determination of a plurality of motion vectors based on a pixel displacement of one or more pixels. The pixel displacement of the one or more pixels in a current frame of a video content is determined with respect to corresponding one or more pixels in a previous frame of the video content. Based on the determined plurality of motion vectors, motion direction of the current frame is extracted. Based on the extracted motion direction, real-time motion annotation information of the current frame is determined.

FIG. 1

EP 3 038 056 A1

**Description**

Various embodiments of the disclosure relate to processing video content. More specifically, various embodiments of the disclosure relate to processing video content for determination of real-time motion annotation information.

Advancements in the field of video processing have introduced various revolutionary functionalities to the digital imaging devices, such as a digital camera or a smartphone. Such functionalities may include motion analysis, dynamic information analysis, and video shot retrieval for objects, surfaces, and/or edges of a visual scene in a video segment. Such a video segment may comprise optical flow that may indicate a relative motion of the objects, surfaces, and/or edges in a visual scene with respect to an observer (such as an eye or a camera).

In certain scenarios, such functionalities may be performed based on a spatial decomposition of the optical flow of the video segment. The spatial decomposition of the optical flow may disintegrate the region of the video segment into different sub-regions. The different sub-regions may be analyzed separately, based on mean and variance values of the different sub-regions. However, the analysis and related computations performed for the decomposition of the optical flow may be complex and hence undesirable.

Further limitations and disadvantages of conventional and traditional approaches will become apparent to one of skill in the art, through comparison of described systems with some aspects of the present disclosure, as set forth in the remainder of the present application and with reference to the drawings.

A method and system for processing video content substantially as shown in, and/or described in connection with, at least one of the figures, as set forth more completely in the claims.

These and other features and advantages of the present disclosure may be appreciated from a review of the following detailed description of the present disclosure, along with the accompanying figures in which like reference numerals refer to like parts throughout.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:

FIG. 1 is a block diagram that illustrates a network environment to process video content, in accordance with an embodiment of the disclosure.

FIG. 2 is a block diagram that illustrates an exemplary image-capturing device, in accordance with an embodiment of the disclosure.

FIGs. 3A to 3N collectively illustrate various exemplary scenarios, in accordance with an embodiment of the disclosure.

FIG. 4 is a table that illustrates a first exemplary scenario to process video content, in accordance with an embodiment of the disclosure.

FIGs. 5A and 5B are graphs that illustrate the first exemplary scenario to process video content, in accordance with an embodiment of the disclosure.

FIG. 6 is a table that illustrates a second exemplary scenario to process video content, in accordance with an embodiment of the disclosure.

FIG. 7 is a graph that illustrates the second exemplary scenario to process video content, in accordance with an embodiment of the disclosure.

FIG. 8 illustrates a third exemplary scenario to process video content, in accordance with an embodiment of the disclosure.

FIGs. 9A to 9D collectively represent a flow chart that illustrates a method to process video content, in accordance with an embodiment of the disclosure.

Various implementations may be found in a method and/or a system to process video content. Exemplary aspects of the disclosure may comprise a method to process video content in a video processing device. A plurality of motion vectors may be determined based on a pixel displacement of one or more pixels in a current frame of a video content with respect to corresponding one or more pixels in a previous frame of the video content. The motion direction of the video content based on the determined plurality of motion vectors in the current frame with respect to the previous frame of the video content may be extracted. Real-time motion annotation information of the current frame may be determined based on the extracted motion direction.

In accordance with an embodiment, a stability variance and global motion vector (GMV) value of the current frame may be determined based on the plurality of motion vectors. The real-time motion annotation information may comprise a frame number of the current frame, an angle of the extracted motion direction, the extracted GMV value of the current frame, a number match point value, a statistical analysis of the plurality of motion vectors, the extracted stability variance, a color frame identification value of the current frame, and an indicator to indicate the motion direction of the video content.

In accordance with an embodiment, motion behavior information of the current frame may be determined based on the extracted motion direction, the stability variance and the GMV value. In accordance with an embodiment, one or more video highlights may be determined in a video segment of the video content based on the determined motion behavior information and a color frame identification value of the current frame of the video segment. When two or more video highlights share one or more attributes, one or more video highlights may be discarded. The color frame identification value may be based on average color values of luminance and chrominance (YUV) color model and an average gradient value.

In accordance with an embodiment, a scene change may be indicated when the determined color frame identification value of the current frame may be different from another color frame identification value of the previous frame. In accordance with an embodiment, a count of identical features between the current frame and the previous frame may be determined. The determination of the plurality of motion vectors may be performed when the determined count of the identical features exceeds a pre-defined threshold. In accordance with an embodiment, the determination of the plurality of motion vectors and the extraction of motion direction may be based on a statistical analysis and an intersection point of the plurality of motion vectors. The plurality of motion vectors are categorized into a first set of motion vectors and a second set of motion vectors. The first set of motion vectors may correspond to one of no motion, a pan motion, and/or a tilt motion, and second set of motion vectors may correspond to one of a forward motion, a backward motion, and/or a rotation motion.

In accordance with an embodiment, an angle of the determined motion direction may be determined to be a predetermined value and a value of a global motion vector to be zero when the first set of motion vectors corresponds to the no motion. In accordance with an embodiment, an angle of the determined motion direction and a value of a global motion vector may be determined when the first set of motion vectors corresponds to the pan motion and/or the tilt motion. In accordance with an embodiment, an intersection point of the plurality of motion vectors, an angle of the determined motion direction, and a value of a global motion vector may be determined when the second set of motion vectors corresponds to the forward motion or the backward motion. In accordance with an embodiment, a rotation parameter of the plurality of motion vectors and a value of a global motion vector may be determined to be zero when the second set of motion vectors corresponds to the rotation motion. In accordance with an embodiment, a color frame identification value of a first frame of a video segment may be different from another color frame ID value of a first frame of a next video segment. In accordance with an embodiment, a curve angle between the video segment and a previous video segment may be determined based on the angle of the determined motion direction for the current frame of the video segment and the previous video segment.

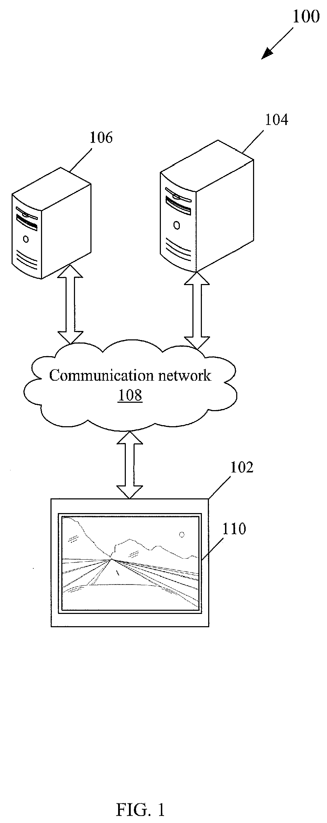

FIG. 1 is a block diagram that illustrates a network environment 100 to process video content, in accordance with an embodiment of the disclosure. With reference to FIG. 1, there is shown a video processing device 102, an application server 104, a video content server 106, and a communication network 108. The video processing device 102 may include a display screen 110. The video processing device 102 may be associated with one or more users, such as a user (not shown). The video processing device 102 may be communicatively coupled to the application server 104 and the video content server 106, via the communication network 108.

The video processing device 102 may comprise suitable logic, circuitry, interfaces, and/or code that may be operable to process the video content. The video processing device 102 may be further operable to receive one or more preferences from the user, via the display screen 110. The video processing device 102 may be further operable to annotate the processed video content in real time, based on color information, global motion vector (GMV) information, and/or motion direction information. The video processing device 102 may be further operable to display the annotated video content on the display screen 110. Examples of the video processing device 102 may include, but are not limited to, a television, an Internet Protocol Television (IPTV), a laptop, a tablet computer, a smartphone, and/or a personal digital assistant (PDA) device.

The application server 104 may comprise suitable logic, circuitry, interfaces, and/or code that may be operable to host an application for one or more subscribed devices, such as the video processing device 102. In accordance with an embodiment, the application, such as a video editing tool, may further process the annotated video content. The application server 104 may be implemented using several technologies that are well known to those skilled in the art.

The video content server 106 may comprise suitable logic, circuitry, interfaces, and/or code that may be operable to host the video content. The video content server 106 may be communicatively coupled with a remote video-capturing (not shown) device. The remote video-capturing device may be configured to capture a live field-of-view and transmit the captured video content to the video content server 106. The video content server 106 may be implemented using several technologies well known to those skilled in the art.

The communication network 108 may include a medium through which the video processing device 102 may communicate with one or more servers, such as the application server 104, and/or the video content server 106. Examples of the communication network 108 may include, but are not limited to, the Internet, a cloud network, a Wireless Fidelity (Wi-Fi) network, a Wireless Local Area Network (WLAN), a Local Area Network (LAN), a telephone line (POTS), and/or a Metropolitan Area Network (MAN). Various devices in the network environment 100 may be operable to connect to the communication network 108, in accordance with various wired and wireless communication protocols. Examples of such wired and wireless communication protocols may include, but are not limited to, Transmission Control Protocol and Internet Protocol (TCP/IP), User Datagram Protocol (UDP), Hypertext Transfer Protocol (HTTP), File Transfer Protocol (FTP), Zigbee, EDGE, infrared (IR), IEEE 802.11, 802.16, cellular communication protocols, and/or Bluetooth (BT) communication protocols.

The display screen 110 may comprise suitable logic, circuitry, interfaces, and/or code that may be operable to render the video content received from the video content server 106. The display screen 110 may be further operable to render one or more features that may correspond to the application downloaded from the application server 104. The display screen 110 may be further operable to receive one or more preferences from the user. The display screen 110 may be realized through several known technologies that may include, but are not limited to, Liquid Crystal Display (LCD) display, Light Emitting Diode (LED) display, Organic LED (OLED) display technology, and/or the like.

In operation, the video processing device 102 may be operable to retrieve the video content from the video content server 106, via the communication network 108. In accordance with an embodiment, the video content server 106 may receive the video content from the remote video-capturing device. The video content server 106 may store the received video content. The video content server 106 may further transmit the stored video content to the video processing device 102. In accordance with an embodiment, the video content server 106 may stream live video content to the video processing device 102 in real time.

In accordance with an embodiment, the display screen 110 may be operable to receive one or more preferences from the user. In accordance with an embodiment, the one or more preferences may comprise a timestamp to select a frame associated with the video content. The one or more preferences may further comprise duration to select a video clip from the video content. In accordance with an embodiment, the one or more preferences may comprise a numeral, "n", based on which one or more frames may be selected. Based on the numeral, "n", every "nth", frame may be selected. The one or more preferences may further comprise color information, gradient information, a frame background, one or more objects, and/or one or more characteristics associated with the one or more objects in the one or more frames associated with the video content.

In accordance with an embodiment, based on the one or more preferences, the video processing device 102 may be operable to select one or more frames. In accordance with an embodiment, the video processing device 102 may be operable to downsize the selected one or more frames from a first resolution value to a second resolution value. In accordance with an embodiment, the first resolution value may be a resolution value that may exceed a threshold value, such as a resolution value that corresponds to a high definition (HD) size. In accordance with an embodiment, the second resolution value may be a resolution value that may be less than the threshold value, such as a resolution value that may correspond to a video graphics array (VGA) size.

In accordance with an embodiment, the video processing device 102 may be operable to buffer at least two consecutive downsized image frames of the video content in a circular buffer. The two consecutive image frames may comprise a previous frame and a current frame. For simplicity, the method to process the video content is described herein, for the two consecutive downsized image frames. Notwithstanding, the disclosure may be not so limited, and similar instances of two consecutive image frames may be processed for the remaining frames in the video content, without deviating from the scope of the disclosure.

In accordance with an embodiment, the video processing device 102 may be operable to determine color information associated with the current frame of the video content. In accordance with an embodiment, the color information associated with the current frame may correspond to a luminance (Y) component, and two chrominance (UV) components, referred to collectively as a, "YUV color model". The video processing device 102 may be configured to determine an average color value of the current frame of the video content.

In accordance with an embodiment, the video processing device 102 may be operable to determine average gradient information associated with the current frame. The gradient information of the current frame may correspond to a directional change in intensity and/or color of one or more objects in the current frame. The video processing device 102 may be configured to determine an average gradient value of the current frame of the video content.

In accordance with an embodiment, the video processing device 102 may be operable to determine color frame identification (ID) value based on the average color values and/or the average gradient value of the current frame. In accordance with an embodiment, the video processing device 102 may be operable to determine the GMV value associated with the current frame.

In accordance with an embodiment, the color frame ID value of the current frame may be similar to another color frame ID value of the previous frame. In such a case, the current frame and the previous frame may be in a same video segment of the video content. In accordance with another embodiment, the color frame ID value of the current frame may not be similar to the other color frame ID value of the previous frame. In such an instance, a scene change may be detected in the video content. Based on the detected scene change, the video processing device 102 may determine an end of a previous video segment and start of a new video segment. Notwithstanding, the disclosure may not be so limited, the video processing device 102 may be operable to generate a plurality of video segments, without limiting the scope of the disclosure.

In accordance with an embodiment, the video processing device 102 may be operable to determine common objects between the current frame and the previous frame. In accordance with an embodiment, the video processing device 102 may be operable to determine a count of identical features between the determined common objects. In an instance, the count of identical features may be less than a threshold value. In such a case, a count of identical features between the next frame and the current frame may be determined. In an instance, the count of identical features may exceed the threshold value. In such a case, a plurality of motion vectors may be determined for the current frame. In accordance with an embodiment, the video processing device 102 may be operable to determine the plurality of motion vectors based on a pixel displacement of one or more pixels in the current frame. The one or more pixels in the current frame may correspond to the one or more pixels in the previous frame.

In accordance with an embodiment, the video processing device 102 may be operable to extract motion direction based on the determined plurality of motion vectors in the current frame of the video content. In accordance with an embodiment, the motion direction may be determined based on a statistical analysis of the plurality of motion vectors. In accordance with an embodiment, an intersection point of the plurality of motion vectors may be based on the spatial orientation of the plurality of motion vectors. Based on the spatial orientation, the plurality of motion vectors may be categorized into a first set of motion vectors or a second set of motion vectors. In accordance with an embodiment, the first set of motion vectors may be consensus motion vectors that may correspond to one of a no motion, a pan motion, and/or a tilt motion. In accordance with an embodiment, the second set of motion vectors may be no-consensus motion vectors that may correspond to one of a forward motion, a backward motion, and/or a rotation motion.

In accordance with an embodiment, the video processing device 102 may be operable to determine an angle of the motion direction, such as a predetermined value of, "90 degrees", when the first set of motion vectors corresponds to no motion. In such a case, the video processing device 102 may be further operable to determine the GMV value to be zero. In accordance with an embodiment, the video processing device 102 may be operable to determine the angle of the motion direction and the GMV value, when the first set of motion vectors corresponds to the pan motion and/or the tilt motion.

In accordance with an embodiment, the video processing device 102 may be operable to determine an intersection point of the plurality of motion vectors, the angle of the motion direction, and/or the GMV value. In such a case, the second set of motion vectors may correspond to the forward motion or the backward motion. In accordance with an embodiment, the video processing device 102 may be operable to determine a rotation parameter of the plurality of motion vectors. In such a case, the video processing device 102 may be operable to determine the GMV value to be zero. In such a case, the second set of motion vectors may correspond to the rotation motion.

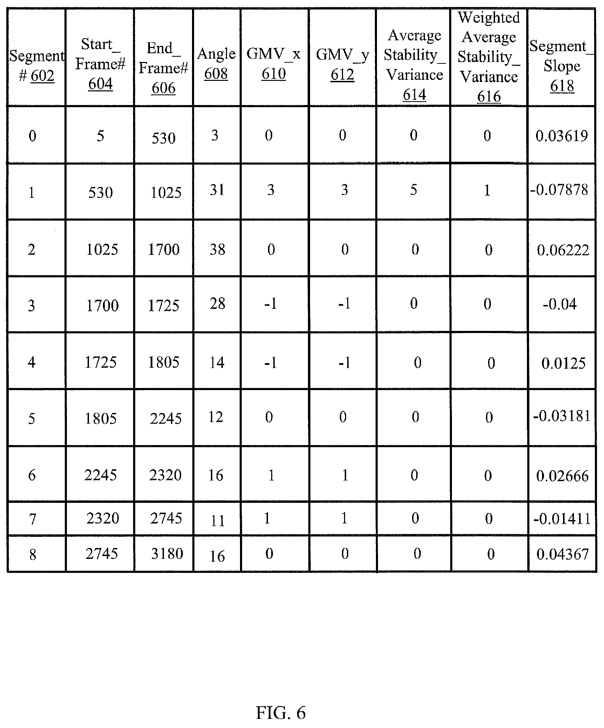

In accordance with an embodiment, the video processing device 102 may detect a scene change in the video content. Based on the detected scene change, the video processing device 102 may determine a conclusion of a previous video segment and conclusion of a new video segment. In accordance with an embodiment, the video processing device 102 may be operable to determine a curve angle between the previous video segment and the current video segment. Such a curve angle may be determined based on the graphical representation of the angle of motion direction of each frame of the video content plotted versus the corresponding frame numbers (as described in FIG. 6).

In accordance with an embodiment, the video processing device 102 may be operable to determine a stability variance based on the plurality of motion vectors. In accordance with an embodiment, the video processing device 102 may be operable to determine a stability variance that may correspond to a change in the GMV value of the current frame. In accordance with an embodiment, the stability variance may be inversely proportional to the change in the GMV value.

In accordance with an embodiment, the video processing device 102 may be operable to determine real-time motion annotation information. The real-time motion annotation information may be based on one or more of the frame numbers of the current frame, the angle of the extracted motion direction, the GMV value, a number match point value, the statistical analysis of the plurality of motion vectors, the stability variance, the color frame ID value of the current frame, and/or an indicator to indicate the motion direction of the current frame.

In accordance with an embodiment, the video processing device 102 may be operable to select video highlights based on the annotation information. The video processing device 102 may choose zero or one or more video highlights. The video highlights may be determined for the current frame of the video content and/or the one or more preferences provided by the user. In an embodiment where video highlights are determined, the video processing device 102 may be operable to discard one or more video highlights from the determined video highlights. In accordance with an embodiment, the one or more video highlights may be discarded when there is a duplication between the determined two or more video highlights.

In accordance with an embodiment, the video processing device 102 may be operable to combine the selected one or more video highlights to generate a composite video. In accordance with an embodiment, the video processing device 102 may be operable to customize the composite video, based on the one or more preferences provided by the user. In accordance with an embodiment, the one or more preferences may comprise an audio file for background music and/or one or more visual effects desired by the user. In accordance with an embodiment, the customized composite video may be rendered on the display screen 110. In accordance with an embodiment, the video processing device 102 may be operable to provide one or more options associated with the composite video to the user. In accordance with an embodiment, the one or more options may comprise transferring, sharing, saving, editing, and/or playing the composite video.

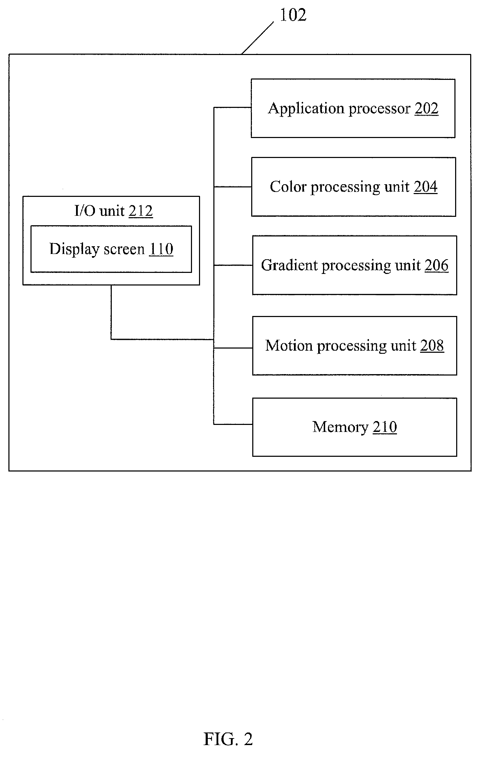

FIG. 2 is a block diagram that illustrates an exemplary video processing device, in accordance with an embodiment of the disclosure. FIG. 2 is explained in conjunction with elements from FIG. 1. With reference to FIG. 2, there is shown the video processing device 102. The video processing device 102 may comprise one or more processors, such as an application processor 202, a color processing unit 204, a gradient processing unit 206, and a motion processing unit 208. The video processing device 102 may further comprise a memory 210, and one or more input/output (I/O) devices, such as an I/O unit 212. The I/O unit 212 may comprise the display screen 110. The application processor 202 may be communicatively coupled to the color processing unit 204, the gradient processing unit 206, the motion processing unit 208, the memory 210, and the I/O unit 212. In accordance with an embodiment, the video processing device 102 may further include a transceiver (not shown). The transceiver may be operable to communicate with other electronic devices (not shown) and/or the one or more servers, such as the application server 104 (as shown in FIG. 1), and/or the video content server 106 (as shown in FIG. 1), via the communication network 108 (as shown in FIG. 1). In such a case, the transceiver may be communicatively coupled to the one or more processors that may comprise the application processor 202, the color processing unit 204, the gradient processing unit 206, and/or the motion processing unit 208.

The application processor 202, the color processing unit 204, the gradient processing unit 206, and the motion processing unit 208 may be implemented as one or more processors. Examples of the application processor 202, the color processing unit 204, the gradient processing unit 206, and the motion processing unit 208 may comprise an X86-based processor, a Reduced Instruction Set Computing (RISC) processor, an Application-Specific Integrated Circuit (ASIC) processor, a Complex Instruction Set Computing (CISC) processor, and/or other processors.

The application processor 202 may comprise suitable logic, circuitry, interfaces, and/or code that may be operable to execute a set of instructions stored in the memory 210. The application processor 202 may be operable to determine a color frame ID value and a GMV value of each frame of the video content. The application processor 202 may be further operable to generate video segments. The application processor 202 may combine the one or more video highlights of the video segments to generate a composite video. The application processor 202 may be implemented based on a number of processor technologies known in the art.

The color processing unit 204 may comprise suitable logic, circuitry, interfaces, and/or code that may be operable to determine and/or process color information associated with the current frame of the video content. In accordance with an embodiment, the color processing unit 204 may be communicatively coupled to a remote video-capturing device (not shown). The color processing unit 204 may be operable to determine an average color value that corresponds to the current frame of the video content, based on one or more algorithms retrieved from the memory 210. The one or more algorithms may correspond to, but are not limited to, an image-processing algorithm, a computer-vision algorithm, and/or a machine-vision algorithm.

The gradient processing unit 206 may comprise suitable logic, circuitry, interfaces, and/or code that may be operable to determine and/or process gradient information associated with the current frame of the video content. In accordance with an embodiment, the gradient processing unit 206 may be communicatively coupled to the remote video-capturing device. The gradient processing unit 206 may be operable to determine an average gradient value that corresponds to the current frame of the video content, based on the one or more algorithms retrieved from the memory 210.

The motion processing unit 208 may comprise suitable logic, circuitry, interfaces, and/or code that may be operable to determine the plurality of motion vectors in the current frame of the video content. The motion processing unit 208 may be further operable to determine a GMV value based on a plurality of motion vectors. The motion processing unit 208 may be further operable to determine a stability variance based on the GMV value.

The memory 210 may comprise suitable logic, circuitry, and/or interfaces that may be operable to store a machine code and/or a computer program with at least one code section executable by the application processor 202. The memory 210 may further be operable to store real-time motion annotation information of each frame of the video content. The memory 210 may be further operable to store one or more quantization values associated with one or more of the color information and/or the gradient information. The memory 210 may be further operable to store the color frame ID value and the GMV value of each frame of the video content. The memory 210 may be further operable to store one or more preferences provided by the user. The memory 210 may be further operable to store one or more algorithms, such as a computer-vision algorithm and/or a machine-vision algorithm. Examples of implementation of the memory 210 may include, but are not limited to, Random Access Memory (RAM), Read Only Memory (ROM), Hard Disk Drive (HDD), and/or a Secure Digital (SD) card.

The I/O unit 212 may comprise suitable logic, circuitry, interfaces, and/or code that may be operable to receive one or more preferences from the user, or provide an output to the user. The I/O unit 212 may comprise various input and output devices that may be operable to communicate with the application processor 202. The I/O unit may comprise the display screen 110. Examples of the input devices may include, but are not limited to, a camera, a camcorder, a touch screen, an input port, a motion sensor, a light sensor, and/or a docking station. Examples of the output devices may include, but are not limited to, a display screen (not shown), and/or a projection screen.

In operation, the application processor 202 may be operable to retrieve the video content from the video content server 106, via the communication network 108. In accordance with an embodiment, the video content server 106 may receive the video content from the remote video-capturing device. The video content server 106 may store the received video content and transmit to the transceiver, via the communication network 108. In accordance with an embodiment, the video content server 106 may stream live video content to the transceiver in real time, via the communication network 108. The transceiver may communicate the received video content to the application processor 202. In accordance with an embodiment, the application processor 202 may be operable to retrieve the desired video content from the memory 210.

In accordance with an embodiment, the display screen 110 may be operable to receive one or more preferences from the user. In accordance with an embodiment, the one or more preferences may comprise a timestamp to select a frame associated with the video content. The one or more preferences may further comprise duration of clip time to select a video clip from the video content. In accordance with an embodiment, the one or more preferences may comprise a numeral, "n", based on which one or more frames may be selected. Based on the numeral, "n", every "nth", frame may be selected. The one or more preferences may further comprise color information, gradient information, a frame background, one or more objects, and/or one or more characteristics associated with the one or more objects in the one or more frames associated with the video content. For example, for a numeral, "5", every fifth frame from the video content may be selected.

In accordance with an embodiment, based on the one or more preferences, the video processing device 102 may be operable to select one or more frames. In accordance with an embodiment, the application processor 202 of the video processing device 102 may be operable to downsize the selected one or more frames from a first resolution value to a second resolution value. In accordance with an embodiment, the first resolution value may be a resolution value that may exceed a threshold value, such as a resolution value that corresponds to an HD size. In accordance with an embodiment, the second resolution value may be a resolution value that may be less than the threshold value, such as a resolution value that may correspond to a VGA size.

In accordance with an embodiment, the application processor 202 may be operable to buffer at least two consecutive downsized image frames of the video content in a circular buffer. The two consecutive image frames may comprise a previous frame and a current frame. In accordance with an embodiment, the previous frame may be stored in a first buffer and the current frame may be stored in a second buffer of the circular buffer. The first and the second buffer may be selected based on equations (1) and (2).

$$\text{First Buffer} = [(\text{Frame Number} - 1) \text{ MOD } 2] \tag{1}$$

$$\text{Second Buffer} = [(\text{Frame Number}) \text{ MOD } 2] \tag{2}$$

where, "MOD", may represent a modulo operator.

In accordance with an embodiment, the color processing unit 204 may be operable to determine the color information associated with the current frame of the video content. In accordance with an embodiment, the color information associated with the current frame may correspond to a luminance (Y) component, and two chrominance (UV) components, referred to collectively as a, "YUV color model". The color processing unit 204 may be configured to determine an average color value of the current frame of the video content.

In accordance with an embodiment, the color processing unit 204 may be configured to divide the current frame into one or more quantization bins, based on a quantization value, "Q". Notwithstanding, the disclosure may not be so limited, another processor, such as the application processor 202 and/or gradient processing unit 206, may be operable to determine the quantization value, "Q", without limiting the scope of the disclosure. In accordance with an embodiment, the number of such one or more quantization bins may be determined based on a user preference. In accordance with an embodiment, the number of quantization bins may be determined based on a pre-stored value retrieved from the memory 210.

In accordance with an embodiment, the color processing unit 204 may be configured to compute a quantization divider value, such as, "div", based on the quantization value, "Q", in accordance with equation (3).

$$div = 256 / Q \qquad (3)$$

In accordance with an embodiment, the color processing unit 204 may be operable to communicate the quantization value, "Q", to the application processor 202. In accordance with an embodiment, the color processing unit 204 may be operable to store the quantization value, "Q", in the memory 210.

In accordance with an embodiment, the color processing unit 204 may be configured to determine an average color value that corresponds to each component associated with a color model. For example, in case of the derived color model, such as the YUV color model, the average color value may correspond to an average of luminance (Y), such as, "avg Y", an average of a first chrominance component (U), such as, "avg U", and an average of a second chrominance component (V), such as, "avg V", of the current frame. In accordance with an embodiment, the color processing unit 204 may be configured to determine a plurality of quantization values, such as a Y quantization value, "y", a U color quantization value, "u", and a V color quantization value, "v", in accordance with the equations (4), (5), and (6).

$$y = (avg\ Y) / div \qquad (4)$$

$$u = (avg\ U) / div \qquad (5)$$

$$v = (avg\ V) / div \qquad (6)$$

where, "avg Y", "avg U", and "avg V", are the average Y, U, and V values, respectively. The Y, U, and V values correspond to the current frame of the video content.

The plurality of color quantization values may indicate a plurality of bin numbers that correspond to the average color value. In accordance with an embodiment, the color processing unit 204 may be further operable to communicate the determined plurality of color quantization values to the application processor 202. In accordance with an embodiment, the color processing unit 204 may store the determined plurality of quantization values in the memory 210.

In accordance with an embodiment, the gradient processing unit 206 may be operable to determine gradient information associated with the current frame of the video content. The gradient information of the current frame of the video content may correspond to a directional change in intensity and/or color of one or more objects in the current frame. The gradient processing unit 206 may be configured to determine an average gradient value, such as, "G", that may correspond to the current frame of the video content. In accordance with an embodiment, the gradient processing unit 206 may be configured to determine a gradient quantization value, such as, "g", based on the quantization divider value, such as, "div", in accordance with equation (7).

$$g = (avg\ G) / div \qquad (7)$$

In accordance with an embodiment, the gradient processing unit 206 may be further operable to communicate the determined gradient quantization value, "g", to the application processor 202. In accordance with an embodiment, the color processing unit 204 may store the determined gradient quantization value, "g", in the memory 210.

In accordance with an embodiment, the application processor 202 may be operable to generate a color frame ID value based on the determined plurality of color quantization values and the gradient quantization value. The color frame ID value may be determined in accordance with equation (8).

$$\text{color frame ID value} = (y* Q * Q * Q) + (u* Q * Q) + (v*Q) + g \qquad (8)$$

In accordance with an embodiment, the application processor 202 may determine the color frame ID value of the current frame and the color frame ID value of the previous frame. In accordance with an embodiment, the color frame ID value may be similar to the other color frame ID value. In such an instance, the current frame and the previous frame may be in the same video segment of the video content. In accordance with an embodiment, the color frame ID value of the current frame may not be similar to another color frame ID value of a previous frame. In such an instance, a scene change may be detected in the video content. Based on the detected scene change, the video processing device 102 may determine an end of a previous video segment and a start of a new video segment. Notwithstanding, the disclosure may not be so limited, and the video processing device 102 may be operable to generate a plurality of video segments, without limiting the scope of the disclosure.

In accordance with an embodiment, the application processor 202 may be operable to determine common objects between the current frame and the previous frame. In accordance with an embodiment, the video processing device 102 may be operable to determine a count of identical features between the determined common objects. In an instance, the count of the identical features may be less than a threshold value. In such a case, a count of identical features between a next frame and the current frame may be determined. In accordance with an embodiment, the count of identical features may exceed the threshold value. In such a case, the plurality of motion vectors may be determined. In accordance with an embodiment, the application processor 202 may be operable to determine the plurality of motion vectors based on a pixel displacement of one or more pixels in the current frame. The pixel displacement of one or more pixels in the current frame corresponds to one or more pixels in the previous frame.

In accordance with an embodiment, the motion processing unit 208 may be operable to determine the GMV value associated with the current frame. In accordance with an embodiment, the motion processing unit 208 may be configured to divide the current frame into one or more quantization bins based on the quantization value "Q". In accordance with an embodiment, the motion processing unit 208 may be operable to communicate the quantization value "Q", to the application processor 202. In accordance with an embodiment, the motion processing unit 208 may be operable to store the quantization value "Q", in the memory 210.

In accordance with an embodiment, the motion processing unit 208 may be operable to determine an x-axis translation quantization value "$Q_x$", a y-axis translation quantization value "$Q_y$", and a rotation quantization value "$Q_r$", of the current frame. In accordance with an embodiment, the motion processing unit 208 may be further operable to determine a plurality of motion vectors of the current frame. The plurality of motion vectors may include, a first motion value "$t_x$", a second motion value "$t_y$", and a third motion value "rot".

The first motion value "$t_x$", may correspond to a transition of the video content in the current frame along the x-axis. The second motion value, such as "$t_y$", may correspond to a transition of the video content in the current frame along the y-axis. The third motion value ,"rot", may correspond to a rotational component of the video content in the current frame. In accordance with an embodiment, the motion processing unit 208 may be further operable to determine a plurality of motion quantization values, such as x-axis motion quantization value "x", y-axis motion quantization value "y", and rotational motion quantization value "r", in accordance with equations (9), (10), and (11).

$$x = \min (Q\text{-}1, abs (t_x / Q_x)) \qquad (9)$$

$$y = \min (Q\text{-}1, abs (t_y / Q_y)) \qquad (10)$$

$$r = \min (Q\text{-}1, abs (rot / Q_r)) \qquad (11)$$

In accordance with an embodiment, the color processing unit 204 may be further operable to communicate the plurality of motion quantization values determined in equations (9), (10), and (11), to the motion processing unit 208. In accordance with an embodiment, the motion processing unit 208 may store the determined plurality of motion quantization values in the memory 210. In accordance with an embodiment, the application processor 202 may be operable to generate the GMV value, based on the determined plurality of motion quantization values and an encoded sign pattern, "EncodedSignPattern". In accordance with an embodiment, the GMV value may be determined in accordance with equation (12).

$$GMV \; value = (x^* \, Q^* \, Q) + (y^* \, Q) + r + EncodedSignPattern \qquad (12)$$

In accordance with an embodiment, the color frame ID value and the GMV value may be stored in the memory 210. In accordance with an embodiment, the application processor 202 may be operable to determine a first intermediate frame, based on a change in one or both of the color frame ID value and the GMV value. In accordance with an embodiment, the application processor 202 may be operable to determine the second intermediate frame, based on a change in one or both of another color frame ID value and another GMV value of another frame. In such an embodiment, the other color frame ID value and the other GMV value for the other frame may be determined in a way similar to the determination of the color frame ID value and the GMV value for a current frame.

In accordance with an embodiment, the application processor 202 may be operable to determine one or more frames between the first intermediate frame and the second intermediate frame. Based on the determined first intermediate frame and/or the second intermediate frame, the application processor 202 may be operable to generate a video segment. Notwithstanding, the disclosure may not be so limited, the application processor 202 may be operable to generate a plurality of the video segments based on a plurality of intermediate frames, without limiting the scope of the disclosure.

In accordance with an embodiment, the first intermediate frame and/or the second intermediate frame may indicate a scene change in the video content. Such a scene change indicated by the color frame ID value and the GMV value may be utilized in a variety of applications. Examples of such applications may include, but are not limited to, an intelligent video digest extraction, video indexing for quick browsing, real-time key frame extraction for video encoding, and/or change detection in surveillance videos.

In accordance with an embodiment, the motion processing unit 208 may be operable to determine a stability variance. The stability variance may correspond to a change in GMV value in the current frame with respect to the previous frame. In accordance with an embodiment, the stability variance may be inversely proportional to the change in the GMV value. In accordance with an embodiment, the motion processing unit 208 may determine the stability variance for the current frame of the video content, based on the one or more algorithms retrieved from the memory 210. In accordance with an embodiment, the motion processing unit 208 may determine the stability variance for the current frame of the video content, based on the determined plurality of motion vectors. For example, the stability variance for frames of a video content associated with a surveillance camera may be high. The frames may exhibit a negligible transitional and/or rotational motion of one or more objects in the frames, hence the high variance. In an exemplary scenario, the video content may comprise abrupt activities, such as a road accident, thunder, and/or a heavy traffic situation. In such a scenario, value of the stability variance for the frames of the video content may be less than a pre-defined threshold value as the frames exhibit a substantial transitional and/or rotational motion of the one or more objects in the frames.

In accordance with an embodiment, the application processor 202 may be operable to select the frames with the value of stability variance greater than the pre-defined threshold value, so that the transitions in a composite video, generated based on the one or more highlights, are smooth. In accordance with an embodiment, the application processor 202 may be operable to automatically select the frames with the value of the stability rank less than the pre-defined threshold value. In such a case, the automatically selected frames may comprise the abrupt activities.

In accordance with an embodiment, the motion processing unit 208 may be operable to extract motion direction based on the determined plurality of motion vectors in the current frame of the video segment. In accordance with an embodiment, the motion direction may be determined based on a statistical analysis of the plurality of motion vectors. In accordance with an embodiment, an intersection point of the plurality of motion vectors may be determined based on the statistical analysis of the plurality of motion vectors. The plurality of motion vectors may be categorized into a first set of motion vectors or a second set of motion vectors. In accordance with an embodiment, the first set of motion vectors may correspond to one of a no motion, a pan motion, and/or a tilt motion. In accordance with an embodiment, the second set of motion vectors may correspond to one of a forward motion, a backward motion, and/or a rotation motion.

In accordance with an embodiment, the motion processing unit 208 may be operable to determine an angle of the motion direction, such as a predetermined value of "90 degrees", when the first set of motion vectors corresponds to no motion. In such a case, the motion processing unit 208 may be further operable to determine the GMV value to be zero. In accordance with an embodiment, the motion processing unit 208 may be operable to determine the angle of the motion direction and the GMV value, when the first set of motion vectors corresponds to the pan motion and/or the tilt motion.

In accordance with an embodiment, the motion processing unit 208 may be operable to determine an intersection point of the plurality of motion vectors, the angle of the motion direction, and/or the GMV value. In such a case, the second set of motion vectors may correspond to the forward motion or the backward motion. In accordance with an embodiment, the motion processing unit 208 may be operable to determine a rotation parameter of the plurality of motion vectors. In such a case, the motion processing unit 208 may be operable to determine the GMV value to be zero. In such a case, the second set of motion vectors may correspond to the rotation motion.

In accordance with an embodiment, the motion processing unit 208 may be operable to determine a curve angle between the previous video segment and the current video segment. Such a curve angle may be determined based on the graphical representation of the angle of motion direction of each frame of the video content plotted versus the corresponding frame numbers (as described in FIG. 6).

In accordance with an embodiment, the application processor 202 may be operable to determine real-time motion annotation information. The real-time motion annotation information may be based on one or more of the frame numbers of the current frame, the angle of the extracted motion direction, the GMV, a number match point value, the statistical analysis of the plurality of motion vectors, the stability variance, the color frame ID value of the current frame, and an indicator to indicate the motion direction of the current frame.

In accordance with an embodiment, the application processor 202 may be operable to select zero or one or more video highlights based on the annotation information. The zero or one or more video highlights may be determined for the current frame of the video content and/or the one or more preferences provided by the user. In accordance with an embodiment, when highlights are chosen, the application processor 202 may be further operable to discard one or more video highlights from the determined one or more video highlights. In accordance with an embodiment, the one or more video highlights may be discarded when there is a duplication between the determined two or more video highlights.

In accordance with an embodiment, the application processor 202 may be operable to combine the selected one or more video highlights to generate a composite video. In accordance with an embodiment, the application processor 202 may be operable to customize the composite video based on the one or more preferences provided by the user. In accordance with an embodiment, the one or more preferences may comprise an audio file for background music and/or one or more visual effects desired by the user. In accordance with an embodiment, the customized composite video may be rendered on the display screen 110. In accordance with an embodiment, the application processor 202 may be operable to provide one or more options associated with the composite video to the user. In accordance with an embodiment, the one or more options may comprise transferring, sharing, saving, editing, and/or playing the composite video.

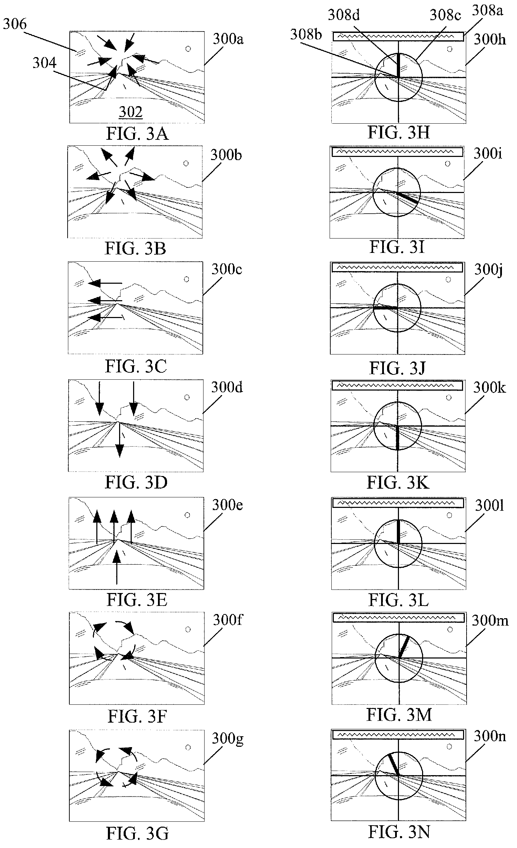

FIGs. 3A to 3N collectively illustrate various exemplary scenarios, in accordance with an embodiment of the disclosure. FIGs. 3A to 3N are explained in conjunction with elements from FIG. 1 and FIG. 2. With reference to FIG. 3, there are shown exemplary frames 300a to 300n that correspond to the video content. The video content may comprise a vehicle 302 that moves on a terrain. The terrain may include a road 304 and a landscape 306. The exemplary frames 300a to 300n may comprise a first set of frames 300a to 300g and a second set of frames 300h to 300n. Each motion frame from the first set of frames 300a to 300g may correspond to an annotated frame from the second set of frames 300h to 300n. The annotated frames from the second set of frames 300h to 300n may comprise UI elements, such as a display portion 308a to display annotated information, an intersection point 308b, a graphical cross-point 308c, and a colored indicator 308d that illustrates the angle of motion direction. For simplicity, the UI elements are illustrated for FIG. 3H. Notwithstanding, the UI elements are presented for other annotated frames from the second set of frames 300h to 300n, without deviating from the scope of the disclosure.

The first set of frames 300a to 300g may correspond to different motion cases, based on a statistical analysis of a plurality of motion vectors. The different motion cases may be forward, backward, left, down-tilt, up-tilt, right rotation, and left rotation motions, as illustrated in respective figures 300a to 300g. The second set of frames 300h to 300n may correspond to annotated frames generated based on the corresponding motion frames from the first set of frames 300a to 300g. The annotated frames may comprise real-time motion annotation information of corresponding current motion frame.

With reference to FIG. 3A, the current frame 300a may comprise the vehicle 302. The vehicle 302 may travel on the road 304, such that the landscape 306 encompasses a major portion of the current frame 300a. The current frame 300a may correspond to a frame number with a value "150". A plurality of motion vectors may be plotted in the current frame 300a, with respect to a previous frame (not shown). The plurality of motion vectors may be represented by an arrow (with an arrow head and an arrow tail) for a plurality of features in the current frame 300a. The plurality of features may correspond to the vehicle 302, the road 304, and/or the landscape 306. The arrow head may indicate feature location of the plurality of features in the previous frame. The arrow tail may indicate feature location of the plurality of features in the current frame 300a. The application processor 202 may perform a statistical analysis of the plurality of motion vectors in the current frame 300a. The set of motion vectors of the current frame 300a may indicate a forward motion of the vehicle 302, with respect to the terrain.

The application processor 202 may be further operable to determine an intersection point, such as a, "vanishing point", of the plurality of motion vectors in the current frame 300a. The intersection point may correspond to a point in the current frame 300a, where the plurality of motion vectors appears to converge. The application processor 202 may be further operable to graphically plot a cross-point and an indicator at the intersection point.

The application processor 202 may be further operable to extract motion direction of the current frame based on the plurality of motion vectors. The application processor 202 may be further operable to determine an angle of motion direction based on the extracted motion direction.

In accordance with an embodiment, the color processing unit 204 may divide the current frame 300a into quantization bins based on the quantization value "Q". In accordance with an embodiment, the quantization value "Q", may be based on a user preference and/or a pre-stored value. In accordance with an embodiment, the color processing unit 204 may determine the quantization divider value "div", in accordance with the equation (3). In accordance with an embodiment, the color processing unit 204 may determine the plurality of color quantization values "y", "u", and "v", associated with frame 300a, in accordance with the equations (4), (5), and (6). In accordance with an embodiment, the gradient processing unit 206 may determine the gradient quantization value "g", associated with the current frame 300a, in accordance with the equation (7). The application processor 202 may use the generated plurality of color quantization values "y", "u", and "v", and the gradient value "g", to generate the color frame ID value "Color frame ID". The color frame identification value "Color frame ID", such as "2264", may be generated in accordance with the equation (8).

In accordance with an embodiment, the motion processing unit 208 may determine the motion frame identification value, "GMV value", associated with a pair of frames, such as the current frame 300a, and another frame (not shown) previous to the current frame 300a. In accordance with an embodiment, the motion processing unit 208 may divide the current frame 300a into quantization bins based on the quantization value "Q". In accordance with an embodiment, the motion processing unit 208 may be operable to determine an x-axis translation quantization value "$Q_x$", a y-axis translation quantization value "$Q_y$", and a rotation quantization value "$Q_r$". In accordance with an embodiment, the motion processing unit 208 may further determine the plurality of motion values, such as the first motion value "$t_x$", the second motion value "$t_y$", and the third motion value "rot", associated with the pair of frames. In accordance with an embodiment, the motion processing unit 208 may determine the plurality of motion quantization values, associated with the current frame 300a, in accordance with the equations (9), (10), and (11). The application processor 202 may further generate the motion frame identification value, "GMV value", such as "7", in accordance with the equation (12).

With reference to annotated frame 300h, the application processor 202 may be operable to present the real-time motion annotation information on the current frame 300a. The real-time motion annotation information may be presented in the display portion 308a, The real-time motion annotation information may comprise presentation of the frame number, such as, "Frame#150", the color frame ID, such as, "Color frame ID:2264", the GMV value, such as, "GMV value:7", the angle of motion direction, such as, "Angle:88", and the motion case, such as, "FORWARD". The real-time motion annotation information may comprise presentation of the stability variance for the current frame 300a, such as, "StabiVar:1", of the video content. The stability variance may be based on the plurality of motion quantization values, such as "$t_x$", "$t_y$", and/or "rot", associated with the current frame 300a. The annotated frame 300h further presents the intersection point 308b, the graphical cross-point 308c, and the colored indicator 308d. The colored indicator 308d may illustrate the angle of motion direction based on a deviation of a pointer from the x-axis and the y-axis of the cross-point. Similarly, other annotated frames 300i to 300n, may be generated from corresponding motion frames 300b to 300g, in a similar manner as the annotated frame 300h is generated from the current frame 300a.

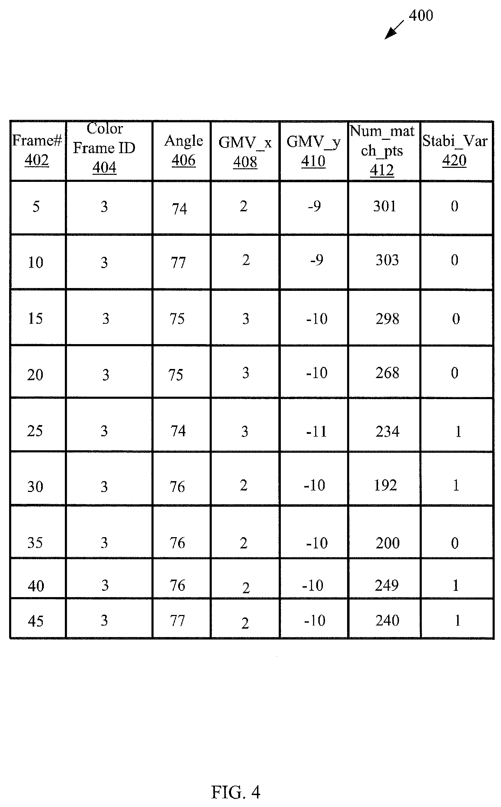

FIG. 4 is a table that illustrates a first exemplary scenario to process video content, in accordance with an embodiment of the disclosure. FIG. 4 is explained in conjunction with elements from FIGs. 1, 2, and 3. With reference to FIG. 4, there is shown a table 400. The table 400 may include a first column 402, such as, "Frame#", which may represent a sequence number of the current frame. The table 400 may include a second column 404, such as, "Color Frame ID", which may represent the color frame ID of the current frame. The table 400 may include a third column 406, such as, "Angle", which may represent the angle of motion direction for the current frame. There may be a fourth column 408, such as, "GMV_x", that may represent the global motion vector along horizontal axis. There may be a fifth column 410, such as, "GMV_y", which may represent the global motion vector along a horizontal axis. The table 400 may include a sixth column 412, such as, "Num_match_pts", that may represent number of pixels between identical features of the current frame and the previous frame. The table 400 may further include a seventh column 420, such as, "Stabi_Var", that may represent the stability variance of the current frame with respect to the previous frame. The table 400 may be populated based on the various values determined by the one or more processors in the video processing device 102 for different frames. Notwithstanding, the table 400 may not be so limited, and more values may be populated into the table 400, without deviating from the scope of the disclosure.

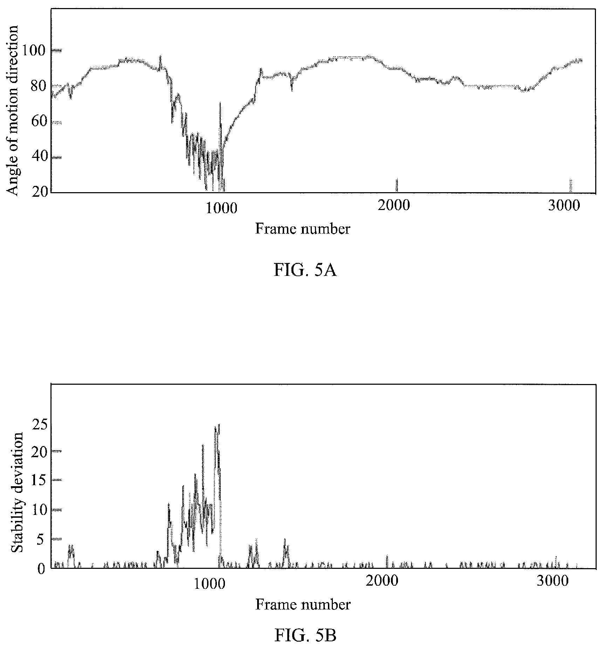

FIGs. 5A and 5B are graphs that illustrate the first exemplary scenario to process video content, in accordance with an embodiment of the disclosure. The graphs in FIGs. 5A and 5B may be plotted in conjunction with the first exemplary scenario illustrated in table 400 (FIG. 4).

With reference to FIG. 5A, a graph may be plotted between, "Angle of Motion Direction", and "Frame number". The "Angle of Motion Direction", may be represented on a y-axis, and the "Frame number", may be represented on an x-axis. In such a graphical representation, the frame number and the corresponding angle of motion direction may be determined from the table 400 (as illustrated in FIG. 4). The slope of the graph in FIG. 5A may represent a motion direction of the current frame with respect to the previous frame. For example, a positive slope may represent a right motion direction of the current frame with respect to the previous frame. A negative slope may represent a left motion direction of the current frame with respect to the previous frame. Similarly, a zero slope may represent same motion direction of the current frame with respect to the previous frame.

With reference to FIG. 5B, another graph may be illustrated. The graph may be plotted between the, "Stability Variance", and the "Frame number". The "Stability Variance", may be represented on a y-axis and the "Frame number", may be represented on an x-axis. With such a graphical representation, the frame number and the stability variance may be determined from the table 400 (as illustrated in FIG. 4).

FIG. 6 is a table that illustrates a second exemplary scenario to process video content, in accordance with an embodiment of the disclosure. FIG. 6 is explained in conjunction with elements from FIGs. 1, 2, and 3. With reference to FIG. 6, there is illustrated a table 600.

The table 600 may include a first column 602, such as, "Segment#", that may represent a segment number; a second column 604, such as, "Start _Frame#", that may represent an initial frame number of the segment; and a third column 606, such as, "End_Frame#", that may represent a final frame number of the segment. The table 600 may further include a fourth column 608, such as, "Angle", that may represent an angle between a current segment and a previous segment; a fifth column 610, such as, "GMV_x", that may represent a global motion vector for the current segment along horizontal axis; and a sixth column 612, such as, "GMV_y", that may represent a global motion vector for the current segment along a vertical axis. The table 600 may further include a seventh column 614, such as, "Average_Stability_Variance", that may represent an average stability variance of the current segment, an eighth column 416, such as "Weighted_Average_Stability_Variance", that may represent a weighted average stability variance of the current segment, and a ninth column 618, such as, "Segment_Slope", that may represent a slope of the segment.

With reference to FIG. 6, a "Segment#", with a value "0", may be determined based on the color frame ID values of frames in the video content. The "Segment#", with the value "0", may start from "Start_Frame#", with a value "5", and end at, "End_Frame#", with a value, "530". The color frame ID for the "Segment#", with the value "0", may be constant or a negligible variance between consecutive values.

For the "Segment#", with the value "0", the value of the "Angle", may be determined to be as "0". Further, the values of "GMV_x", and "GMV_y", may be determined to be as "0", and "-8", respectively, based on the equation (12). Further, the values of "Average_Stability_Deviation", and "Weighted_Average_Stability_Deviation", may be determined to be "0", and "0", respectively. Further, the value of the "Segment_Slope", may be determined to be as "0.0361905". The positive slope may represent a right motion direction of the, "Segment#", with the value "0". The table 600 may be populated based on the various values determined by the one or more processors in the video processing device 102 for different frames. Notwithstanding, the table 600 may not be so limited, and more values may be populated into the table 600, without deviating from the scope of the disclosure.

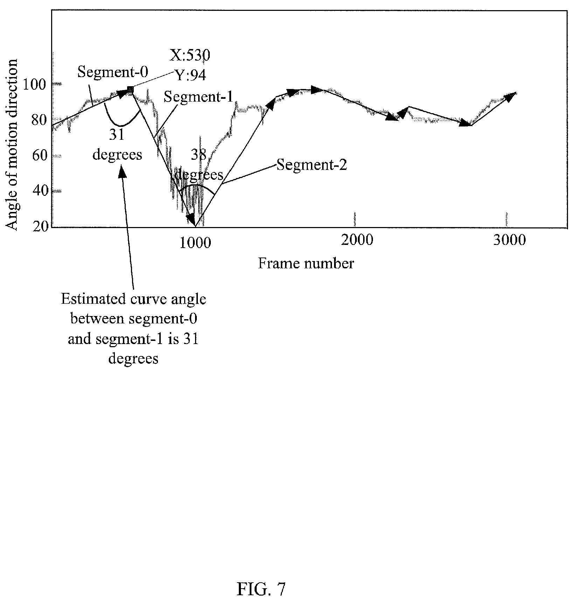

FIG. 7 is a graph that illustrates the second scenario to process video content, in accordance with an embodiment of the disclosure. The graph in FIG. 7 may be plotted in conjunction with the second exemplary scenario illustrated in table 600 (FIG. 6).

With reference to FIG. 7, the illustrated graph may be plotted between, "Angle of Motion Direction", and "Frame number". The "Angle of Motion Direction", may be represented on a y-axis and the "Frame number", may be represented on an x-axis. In such a graphical representation, the frame number and the corresponding angle of motion direction may be determined from the table 600 that was illustrated in FIG.6. The slope of the graph in FIG. 7 may represent a curve angle between motion directions of the two segments. For example, a positive slope may represent a right motion direction of the current segment with respect to the previous segment. A negative slope may represent a left motion direction of the current segment with respect to the previous segment. Similarly, a zero slope may represent same motion direction of the current segment with respect to the previous segment.

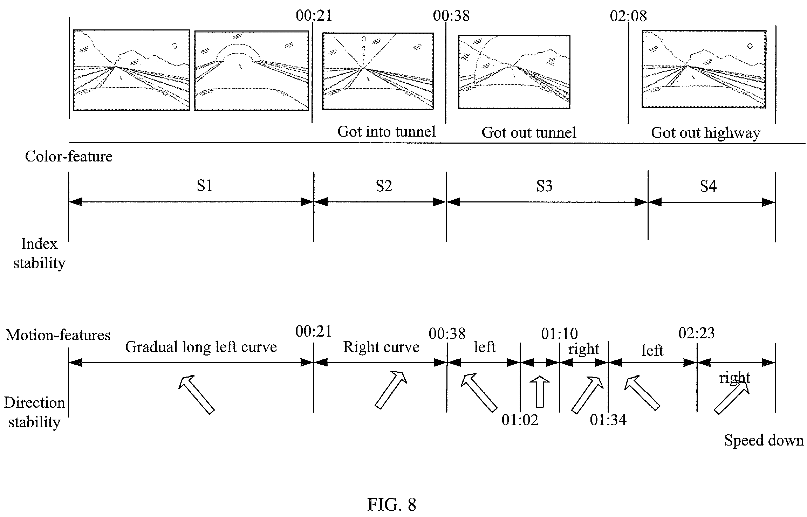

FIG. 8 illustrates a third exemplary scenario to process video content, in accordance with an embodiment of the disclosure. FIG. 8 may be explained in conjunction with FIGs. 1 to 7. With reference to FIG. 8, there is shown a third exemplary scenario 800. The third exemplary scenario 800 may include a sequence of exemplary frames that may correspond to the video content with duration of, "2.50 minutes". The sequence of frames may collectively illustrate a vehicle moving on a terrain. The terrain may include a road, a tunnel, a first landscape, and a second landscape. The application processor 202 may be operable to determine the tables as illustrated in FIGs. 4 and 6.

With reference to FIG. 8, the application processor 202 may be operable to determine real-time motion annotation information, such as color segments and motion segments, for the video segments. There is shown a first time bar representation that may present index stability based on the color frame ID value. With reference to the first time bar representation, at a timestamp, "00.21 minutes", the application processor 202 may detect a sudden change in the color frame ID value, generated by the color processing unit 204, for the current frame. The timestamp may correspond to a moment when the vehicle, which moves on the road with a first landscape, enters the tunnel. The application processor 202 may determine a first color segment "S1", from timestamp, "00.00 minutes", until "00.21 minutes". At another timestamp, "00.38 minutes", the application processor 202 may again detect a sudden change in the color frame ID value, generated by the color processing unit 204, for the current frame. The timestamps may correspond to another moment when the vehicle exits the tunnel. The application processor 202 may determine a second color segment "S2", from timestamp, "00.22 minutes", until "00.38 minutes". At yet another timestamp "02.08 minutes", the application processor 202 may again detect a sudden change in the color frame ID value, generated by the color processing unit, for the current frame. The timestamp may correspond to another moment when the vehicle travels on a highway with the second landscape. The application processor 202 may determine a third color segment "S3", from timestamp "00.39 minutes", until "02.08 minutes". The application processor 202 may further determine a fourth color segment "S4", from timestamp "02.08 minutes", until "02.50 minutes". Such a determination of the color segments, such as "S1", "S2", "S3, and "S4", may be plotted in a time bar for color frame ID, as illustrated in FIG. 8. Such a determination of the color segments, such as "S1", "S2", "S3", and "S", may be plotted in a time bar for color frame ID, as illustrated in FIG. 8.

Similarly, there is shown a second time bar representation that may present direction stability based on the GMV value. With reference to the second time bar representation, the application processor 202 may detect a sudden change in the motion direction, generated by the motion processing unit 208, for the current frame until the timestamp "00:21 minutes", when the vehicle 802 negotiated a gradual left curve. The application processor 202 may determine a first motion segment "Gradual long left curve", from timestamp, "00.00 minutes", until "00.21 minutes". Until another timestamp "00.38 minutes", the vehicle 802 negotiated a right curve. The application processor 202 may determine a second motion segment "Right curve", from the timestamp "00.21 minutes", until "00.38 minutes". Similarly, the application processor 202 may determine other motion segments, as illustrated in FIG. 8, for the video segment.

In accordance with an embodiment, the real-time motion annotation information may be utilized by an application, such as an automatic video editing tool. The automatic video editing tool may automatically identify zero or more highlights from each video segment, based on the real-time motion annotation information. Such highlights may be combined, such that the highlights that share common attributes with previously selected highlights are discarded.

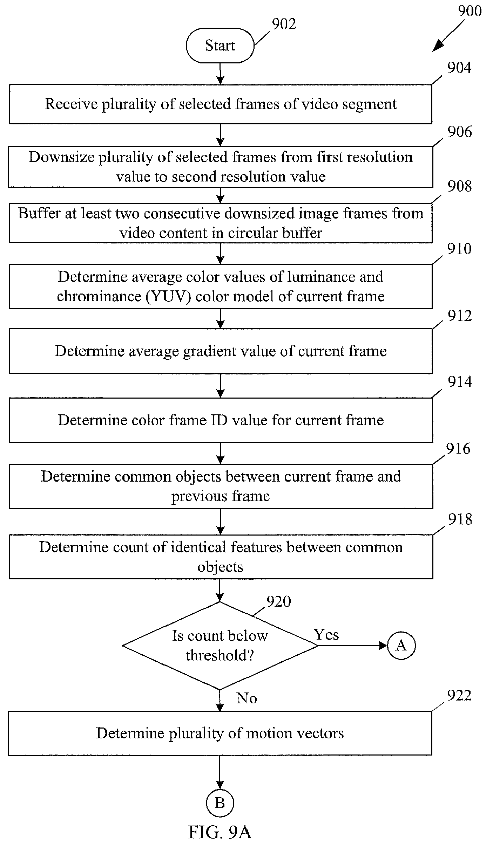

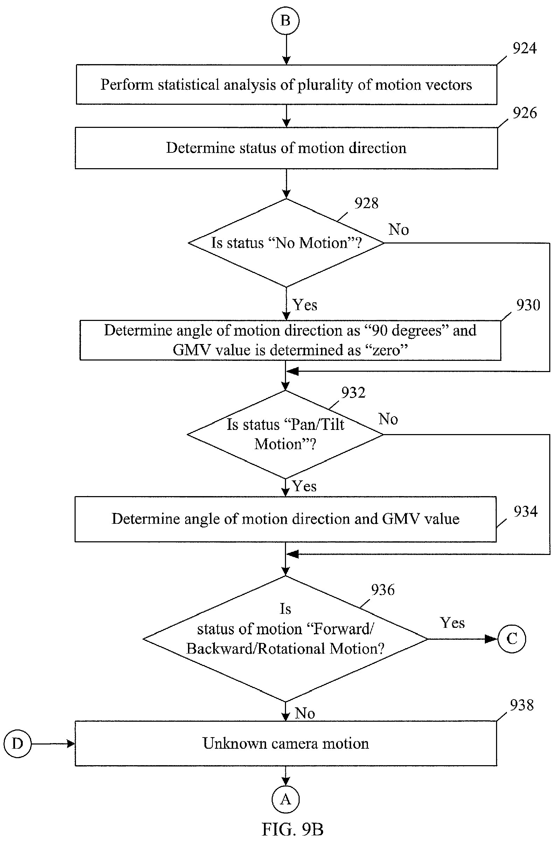

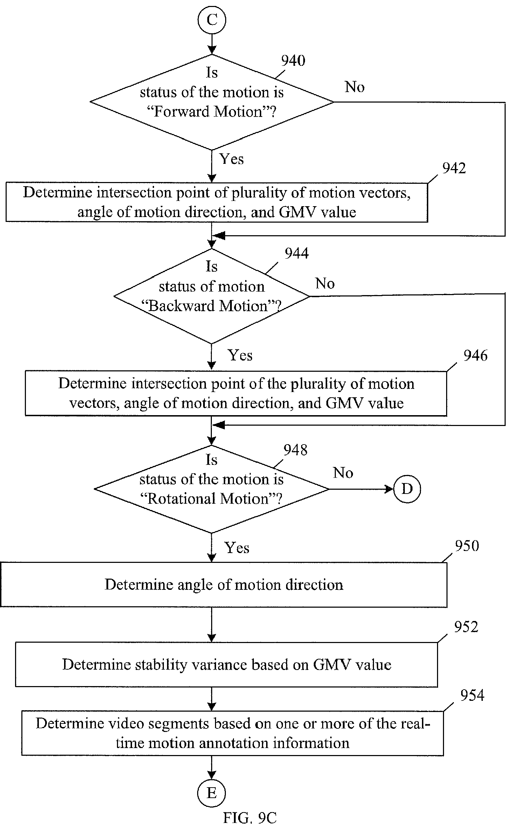

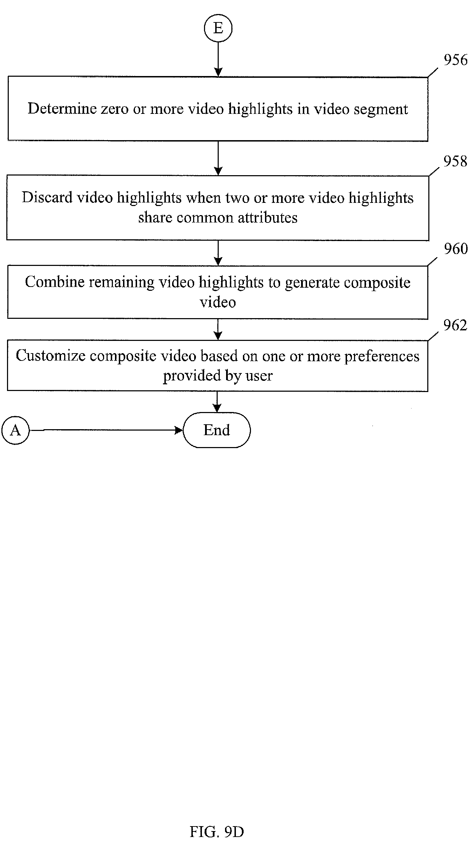

FIGs. 9A to 9D collectively represent a flow chart that illustrates a method to process video content, in accordance with an embodiment of the disclosure. With reference to FIG. 9, there is shown a flow chart 900 that is described in conjunction with FIGs. 1 to 8. The method starts at step 902 and proceeds to step 904.

At step 904, a plurality of selected frames of a video segment may be received. At step 906, the received plurality of selected frames may be downsized from a first resolution value to a second resolution value. At step 908, at least two consecutive downsized image frames from the video content may be buffered in a circular buffer. The two consecutive image frames may comprise a previous frame and a current frame.

At step 910, an average color value of luminance and chrominance (YUV) color model of the current frame of the video content may be determined. At step 912, an average gradient value of the current frame may be determined. At step 914, a color frame ID value for the current frame may be determined based on the average color values and the average gradient value.

At step 916, common objects between the current frame and the previous frame may be determined. At step 918, a count of identical features between the determined common objects may be determined. At step 920, it may be determined whether the count of identical features between the determined common objects is below a threshold value. In an instance when the count of identical features is below the threshold value, control passes back to end step 964. In an instance when the count of identical features is above the threshold value, control passes to step 922. At step 922, a plurality of motion vectors may be determined. The plurality of motion vectors may be determined based on a pixel displacement of one or more pixels in the current frame with respect to corresponding one or more pixels in the previous frame.

At step 924, statistical analysis of the plurality of motion vectors may be performed. At step 926, a status of the motion direction may be determined based on the statistical analysis. At step 928, it may be determined whether the status of the motion is, "No Motion". In an instance, when status of the motion direction is, "No Motion", the control passes to step 930. At step 930, the angle of motion direction may be determined to be, "90 degrees", and the GMV value may be determined to be, "zero". Control passes to step 932. In an instance, when the status of the motion direction is not, "No Motion", the control passes to step 932.

At step 932, it may be determined whether the status of the motion direction is, "Pan/Tilt Motion". In an instance, when status of the motion direction is, "Pan/Tilt Motion", the control passes to step 934. At step 934, the angle of motion direction and the GMV value may be determined. Control passes to step 936. In an instance, when the status of the motion direction is not "Pan/Tilt Motion", the control passes to step 936.

At step 936, it may be determined whether the status of the motion direction is, "Forward/Backward/Rotational Motion". In an instance, when status of the motion direction is not, "Forward/Backward/Rotational Motion", the control passes to step 938. At step 938, the motion direction of the current frame with respect to the previous frame may be determined to be as, "Unknown Motion", and the control passes to end step 964. In an instance, when status of the motion direction is, "Forward/Backward/Rotational Motion", the control passes to step 940.

At step 940, it may be determined whether the status of the motion direction is "Forward Motion". In an instance, when status of the motion direction is, "Forward Motion", the control passes to step 942. At step 942, an intersection point of the plurality of motion vectors, the angle of motion direction, and the GMV value may be determined. Control passes to step 944. In an instance, when the status of the motion direction is not, "Forward Motion", the control passes to step 944.

At step 944, it may be determined whether the status of the motion direction is "Backward Motion". In an instance, when status of the motion direction is, "Backward Motion", the control passes to step 946. At step 946, an intersection point of the plurality of motion vectors, the angle of motion direction, and the GMV value may be determined. Control passes to step 948. In an instance, when the status of the motion direction is not, "Backward Motion", the control passes to step 948.

At step 948, it may be determined whether the status of the motion direction is, "Rotational Motion". In accordance with an embodiment, when status of the motion direction is "Rotational Motion", the control passes to step 950. At step 950, the angle of motion direction may be determined. Further the GMV value may be determined to be "zero". Control passes to step 952. In an instance, when the status of the motion direction is not, "Rotational Motion", the control passes back to step 938.

At step 952, the stability variance may be determined based on the determined GMV value. At step 952, the real-time motion annotation information of the current frame may be recorded based on the motion direction, the angle of motion direction, the stability variance and/or the GMV value. The real-time motion annotation information may further comprise a frame number of the current frames, number of identical pixels between the current frame and the previous frame, the statistical analysis of the plurality of motion vectors, the color frame ID value of the current frame, and the graphical indicator to indicate the motion direction of the current frame.

At step 954, video segments may be determined based on one or more of the real-time motion annotation information. At step 956, zero or more video highlights in the video segment may be determined based on one or more of the real-time motion annotation information. At step 958, zero or more video highlights may be discarded from the determined zero or more video highlights when two or more video highlights share common attributes. At step 960, the remaining video highlights may be combined to generate a composite video. At step 962, the composite video may be customized based on one or more preferences provided by the user. Control passes to end step 964.

In accordance with an embodiment of the disclosure, a system that processes video content is disclosed. A device, such as the video processing device 102 (FIG. 1), may comprise one or more circuits and/or processors, such as the application processor 202, the color processing unit 204, the gradient processing unit 206, and the motion processing unit 208. The one or more processors may be operable to determine a plurality of motion vectors based on a pixel displacement of one or more pixels in a current frame of a video segment. The pixel displacement of one or more pixels in a current frame may be with respect to corresponding one or more pixels in a previous frame of the video segment. The one or more processors may further extract motion direction of the video segment based on the determined plurality of motion vectors in the current frame of the video segment. The one or more processors may further determine real-time motion annotation information of the current frame, based on the extracted motion direction.

Various embodiments of the disclosure may provide a non-transitory computer readable medium and/or storage medium, and/or a non-transitory machine readable medium and/or storage medium having stored thereon, a machine code and/or a computer program having at least one code section executable by a machine and/or a computer that processes video content. The at least one code section in the one or more processors of the video processing device 102 may cause the machine and/or computer to perform the steps that comprise determination of a plurality of motion vectors based on a pixel displacement of one or more pixels in a current frame of a video segment. The pixel displacement of one or more pixels in a current frame may be with respect to corresponding one or more pixels in a previous frame of the video segment. Motion direction of the video segment may be extracted based on the determined plurality of motion vectors in the current frame of the video segment. Real-time motion annotation information of the current frame may be determined, based on the extracted motion direction.

The present disclosure may be realized in hardware, or a combination of hardware and software. The present disclosure may be realized in a centralized fashion, in at least one computer system, or in a distributed fashion, where different elements may be spread across several interconnected computer systems. A computer system or other apparatus adapted for carrying out the methods described herein may be suited. A combination of hardware and software may be a general-purpose computer system with a computer program that, when loaded and executed, may control the computer system such that it carries out the methods described herein. The present disclosure may be realized in hardware that comprises a portion of an integrated circuit that also performs other functions.

The present disclosure may also be embedded in a computer program product, which comprises all the features enabling the implementation of the methods described herein, and which when loaded in a computer system is able to carry out these methods. Computer program, in the present context, means any expression, in any language, code or notation, of a set of instructions intended to cause a system having an information processing capability to perform a particular function either directly, or after either or both of the following: a) conversion to another language, code or notation; b) reproduction in a different material form.

While the present disclosure is described with reference to certain embodiments, it will be understood by those skilled in the art that various changes may be made and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiment disclosed, but that the present disclosure will include all embodiments falling within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Further particular and preferred aspects of the invention are set out in the accompanying independent and dependent clauses. Features of the dependent clauses may be combined with those of the independent clauses and independent claims as appropriate and in combinations other than those explicitly set out in the clauses and claims.

1. The method wherein said first set of motion vectors corresponds to one of: no motion, a pan motion, and/or a tilt motion, and second set of motion vectors corresponds to one of: a forward motion, a backward motion, and/or a rotation motion.

2. The method of clause 1, further comprising determining a rotation parameter of said plurality of motion vectors and a value of a global motion vector to be zero when said second set of motion vectors corresponds to said rotation motion.

3. A method for processing video content, the method comprising:

    in a video processing device:

        determining a plurality of motion vectors based on a pixel displacement of one or more pixels in a current frame of a video content with respect to corresponding one or more pixels in a previous frame of said video content;
        extracting motion direction of said video content based on said determined said plurality of motion vectors in said current frame with respect to said previous frame of said video content; and
        determining real-time motion annotation information of said current frame based on said extracted said motion direction.

4. The method of clause 3, wherein a color frame identification value of a first frame of a video segment is different from another color frame ID value of a first frame of a next video segment.

5. The method of clause 3, further comprising determining a curve angle between said video segment and a previous video segment based on said angle of said determined motion direction for said current frame of said video segment and said previous video segment.

6. A system for processing video content, the system comprising:

    one or more processors operable to:

        determine a plurality of motion vectors based on a pixel displacement of one or more pixels in a current frame of a video content with respect to corresponding one or more pixels in a previous frame of said video content;
        extract motion direction of said video content based on said determined said plurality of motion vectors in said current frame of said video content with respect to said previous frame of said video content; and
        determine real-time motion annotation information of said current frame based on said extracted said motion direction.

7. The system of clause 6, wherein said determined said real-time motion annotation information comprises a frame number of said current frame, an angle of said extracted motion direction, an extracted global motion vector information of said current frame, a number match point value, a statistical consensus of said plurality of motion vectors, an extracted stability variance, a color frame identification value of said current frame, and an indicator for indicating said motion direction of said video content.

**Claims**

1.  A method for processing video content, the method comprising:

    in a video processing device:

        determining a plurality of motion vectors based on a pixel displacement of one or more pixels in a current frame of a video content with respect to corresponding one or more pixels in a previous frame of said video content;
        extracting motion direction of said video content based on said determined said plurality of motion vectors in said current frame with respect to said previous frame of said video content; and
        determining real-time motion annotation information of said current frame based on said extracted said motion direction.

2.  The method of claim 1, further comprising extracting stability variance and global motion vector (GMV) information of said current frame based on said determined said plurality of motion vectors.

3. The method of claim 2, wherein said determined said real-time motion annotation information comprises a frame number of said current frame, an angle of said extracted motion direction, said extracted GMV value of said current frame, a number match point value, a statistical analysis of said plurality of motion vectors, said extracted stability variance, a color frame identification value of said current frame, and an indicator for indicating said motion direction of said video content.

4. The method of claim 2, further comprising determining motion behavior information of said current frame based on said extracted said motion direction, said stability variance and said GMV value.

5. The method of claim 4, further comprising determining one or more video highlights in a video segment of said video content based on said determined said motion behavior information and a color frame identification value of said current frame of said video segment.

6. The method of claim 5, further comprising discarding one or more video highlights from said determined one or more video highlights when two or more video highlights share one or more attributes.

7. The method of claim 5, further comprising determining said color frame ID value based on average color values of luminance and chrominance (YUV) color model and an average gradient value.

8. The method of claim 5, further comprising indicating a scene change when said determined color frame ID value of said current frame is different from another color frame ID value of said previous frame.

9. The method of claim 1, further comprising determining a count of identical features between said current frame and said previous frame.

10. The method of claim 9, wherein said determination of said plurality of motion vectors is performed when said determined said count of said identical features exceeds a pre-defined threshold.

11. The method of claim 1, wherein said determination of said plurality of motion vectors and said extraction of motion direction is based on a statistical analysis and an intersection point of said plurality of motion vectors, wherein said plurality of motion vectors are categorized into a first set of motion vectors and a second set of motion vectors.

12. The method of claim 11, wherein said first set of motion vectors corresponds to one of: no motion, a pan motion, and/or a tilt motion, and second set of motion vectors corresponds to one of: a forward motion, a backward motion, and/or a rotation motion.

13. The method of claim 12, further comprising determining an angle of said determined said motion direction to be a predetermined value and a value of a global motion vector to be zero when said first set of motion vectors corresponds to said no motion.

14. The method of claim 12, further comprising determining an angle of said determined motion direction and a value of a global motion vector when said first set of motion vectors corresponds to said pan motion and/or said tilt motion.

15. The method of claim 12, further comprising determining an intersection point of said plurality of motion vectors, an angle of said determined motion direction, and a value of a global motion vector when said second set of motion vectors corresponds to said forward motion or said backward motion.

100

104

106

Communication network
108

102

110

FIG. 1

102

I/O unit 212

Display screen 110

Application processor 202

Color processing unit 204

Gradient processing unit 206

Motion processing unit 208

Memory 210

FIG. 2

FIG. 3A

FIG. 3B

FIG. 3C

FIG. 3D

FIG. 3E

FIG. 3F

FIG. 3G

FIG. 3H

FIG. 3I

FIG. 3J

FIG. 3K

FIG. 3L

FIG. 3M

FIG. 3N

400

| Frame# 402 | Color Frame ID 404 | Angle 406 | GMV_x 408 | GMV_y 410 | Num_match_pts 412 | Stabi_Var 420 |
|---|---|---|---|---|---|---|
| 5 | 3 | 74 | 2 | -9 | 301 | 0 |
| 10 | 3 | 77 | 2 | -9 | 303 | 0 |
| 15 | 3 | 75 | 3 | -10 | 298 | 0 |
| 20 | 3 | 75 | 3 | -10 | 268 | 0 |
| 25 | 3 | 74 | 3 | -11 | 234 | 1 |
| 30 | 3 | 76 | 2 | -10 | 192 | 1 |
| 35 | 3 | 76 | 2 | -10 | 200 | 0 |
| 40 | 3 | 76 | 2 | -10 | 249 | 1 |
| 45 | 3 | 77 | 2 | -10 | 240 | 1 |

FIG. 4

FIG. 5A

FIG. 5B

| Segment # 602 | Start_ Frame# 604 | End_ Frame# 606 | Angle 608 | GMV_x 610 | GMV_y 612 | Average Stability_ Variance 614 | Weighted Average Stability_ Variance 616 | Segment_ Slope 618 |
|---|---|---|---|---|---|---|---|---|
| 0 | 5 | 530 | 3 | 0 | 0 | 0 | 0 | 0.03619 |
| 1 | 530 | 1025 | 31 | 3 | 3 | 5 | 1 | -0.07878 |
| 2 | 1025 | 1700 | 38 | 0 | 0 | 0 | 0 | 0.06222 |
| 3 | 1700 | 1725 | 28 | -1 | -1 | 0 | 0 | -0.04 |
| 4 | 1725 | 1805 | 14 | -1 | -1 | 0 | 0 | 0.0125 |
| 5 | 1805 | 2245 | 12 | 0 | 0 | 0 | 0 | -0.03181 |
| 6 | 2245 | 2320 | 16 | 1 | 1 | 0 | 0 | 0.02666 |
| 7 | 2320 | 2745 | 11 | 1 | 1 | 0 | 0 | -0.01411 |
| 8 | 2745 | 3180 | 16 | 0 | 0 | 0 | 0 | 0.04367 |

FIG. 6

FIG. 7

00:21　　　　　　　　00:38　　　　　　　　　　02:08

Got into tunnel　　　Got out tunnel　　　　Got out highway

Color-feature

| S1 | S2 | S3 | S4 |
|---|---|---|---|

Index
stability

Motion-features　　　　　　　　　00:21　　　　　　00:38　　　01:10　　　　02:23

Gradual long left curve　　　Right curve　　left　　　　right　　left

Direction
stability　　　　　　　　　　　　　　　　　　　　01:02　　　01:34　　　right

Speed down

FIG. 8

900

Start 902

904
Receive plurality of selected frames of video segment

906
Downsize plurality of selected frames from first resolution value to second resolution value

908
Buffer at least two consecutive downsized image frames from video content in circular buffer

910
Determine average color values of luminance and chrominance (YUV) color model of current frame

912
Determine average gradient value of current frame

914
Determine color frame ID value for current frame

916
Determine common objects between current frame and previous frame

918
Determine count of identical features between common objects

920
Is count below threshold?

Yes — A

No 922
Determine plurality of motion vectors

B

FIG. 9A

FIG. 9B

C

Is
status of the motion is
"Forward Motion"?
940

No

Yes

Determine intersection point of plurality of motion vectors, angle of motion direction, and GMV value
942

Is
status of motion
"Backward Motion"?
944

No

Yes

Determine intersection point of the plurality of motion vectors, angle of motion direction, and GMV value
946

Is
status of the motion is
"Rotational Motion"?
948

No

D

Yes

Determine angle of motion direction
950

Determine stability variance based on GMV value
952

Determine video segments based on one or more of the real-time motion annotation information
954

E

FIG. 9C

E

956

Determine zero or more video highlights in video segment

958

Discard video highlights when two or more video highlights share common attributes

960

Combine remaining video highlights to generate composite video

962

Customize composite video based on one or more preferences provided by user

A ──────────► End

FIG. 9D

Europäisches Patentamt
European Patent Office
Office européen des brevets

# EUROPEAN SEARCH REPORT

Application Number

EP 15 19 8512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIONG W ET AL: "Efficient Scene Change Detection and Camera Motion Annotation for Video Classification", COMPUTER VISION AND IMAGE UNDERSTANDING, ACADEMIC PRESS, US, vol. 71, no. 2, 1 August 1998 (1998-08-01), pages 166-181, XP004448861, ISSN: 1077-3142, DOI: 10.1006/CVIU.1998.0711 | 1,9,10 | INV. G06T7/20 |
| Y | * abstract * | 11,12 | |
| A | * page 180, column 1, lines 5-7 * * section 4.2 * * section 4.3; figure 7 * * page 174, column 2, paragraph 1 * * page 176, column 2, paragraph 1 * * table 7 * | 2-8, 13-15 | |
| Y | MENG J ET AL: "TOOLS FOR COMPRESSED-DOMAIN VIDEO INDEXING AND EDITING", STORAGE AND RETRIEVAL FOR STILL IMAGE AND VIDEO DATABASES 4. SAN JOSE, FEB. 1 - 2, 1996; [PROCEEDINGS OF SPIE], BELLINGHAM, SPIE, US, vol. 2670, 1 February 1996 (1996-02-01), pages 180-191, XP000642569, ISBN: 978-0-8194-2044-2 * section 3.1 * | 11,12 | |

TECHNICAL FIELDS SEARCHED (IPC)

G06K
G06T

The present search report has been drawn up for all claims

| Place of search | Date of completion of the search | Examiner |
|---|---|---|
| Munich | 6 May 2016 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)